# EUROPEAN PATENT APPLICATION

(11) **EP 4 439 839 A1**
(43) Date of publication of application: **02.10.2024**
(21) Application number: 22911996.1
(22) Date of filing: 22.12.2022
(51) Int. Cl.: H01M 50/30, H01M 10/04, H01M 50/105, H01M 50/124, H01M 50/183, H01M 10/052

(54) **POUCH-TYPE BATTERY CASE AND LITHIUM SECONDARY BATTERY COMPRISING SAME**

(30) Priority: 24.12.2021 KR 20210187274
(71) Applicant: LG Energy Solution, Ltd., Seoul 07335 (KR)
(72) Inventor: KANG, Min Hyeong, Daejeon 34122 (KR); KIM, Sang Hun, Daejeon 34122 (KR); YU, Hyung Kyun, Daejeon 34122 (KR); HWANG, Soo Ji, Daejeon 34122 (KR); SONG, Dae Woong, Daejeon 34122 (KR); LIM, Hun Hee, Daejeon 34122 (KR)
(74) Representative: Plasseraud IP
(86) International application number: PCT/KR2022/021111
(87) International publication number: WO 2023/121363

(57) **Abstract**

The present invention relates to a high-strength battery case with less cracking during molding and less damage caused by external impact, wherein the battery case of the present invention is composed a pouch-type battery case composed of a pouch film laminate body including a gas barrier layer, a base layer disposed on one surface of the gas barrier layer, and a sealant layer disposed on the other surface of the gas barrier layer, and includes at least one cup portion having a recessed shape so as to accommodate an electrode assembly, and a terrace positioned in at least a portion of the circumference of the cup portion, wherein the cup portion includes a bottom surface and a plurality of circumference surfaces surrounding the bottom surface, and the thickness of the gas barrier layer is greater than 30 um at a corner at which the bottom surface comes into contact with a pair of circumferences adjacent to each other.

## Description

### TECHNICAL FIELD

This application claims the benefit of Korean Patent Application No. 10-2021-0187274, filed on December 24, 2021, in the Korean Intellectual Property Office, the disclosure of which is incorporated herein in its entirety by reference.

The present invention relates to a pouch-type battery case, and more specifically, to a high-strength battery case with reduced damage caused by external stress, and a lithium secondary battery including the same.

### BACKGROUND ART

A secondary battery is applied and used in small products such as digital cameras, P-DVDs, MP3P, mobile phones, PDAs, portable game devices, power tools, and e-bikes, as well as large products that require high power such as electric vehicles and hybrid vehicles, and power storage devices for storing surplus generated power or renewable energy, and power storage devices for backup power.

Typically, a secondary battery is manufactured by applying an electrode active material slurry on a positive electrode current collector and a negative electrode current collector to manufacture a positive electrode and a negative electrode, stacking the positive electrode and the negative electrode on both sides of a separator to form an electrode assembly having a predetermined shape, and then accommodating the electrode assembly in a battery case, followed by injecting an electrolyte thereinto and sealing the case.

The secondary battery is classified into a pouch-type secondary battery, and a can-type secondary battery according to the material of the case accommodating the electrode assembly. The pouch-type secondary battery accommodates the electrode assembly in a pouch made of a flexible polymer material.

The pouch-type battery case is manufactured by performing press processing on a flexible pouch film laminate body, thereby forming a cup portion for accommodating an electrode assembly. Thereafter, the electrode assembly is accommodated in the cup portion of the battery case and an electrolyte solution is injected thereinto, and then a sealing portion is sealed to manufacture a secondary battery.

In the press processing, drawing molding is performed by inserting a pouch film into press equipment and applying pressure to a pouch film laminate body with a punch, thereby stretching the pouch film laminate body. The pouch film laminate body is generally formed of a plurality of layers in which a polymer film such as polyethylene terephthalate is laminated on one surface of a gas barrier layer made of a metal, and a sealant layer is laminated on the other surface thereof.

Recently, as the demand for high-capacity batteries such as electric vehicle batteries or ESS batteries increases, the demand for battery cases capable of accommodating more electrode assemblies is increasing. Accordingly, a method for increasing a cup portion molding depth of a pouch-type battery case, or a two-cup molding method for molding a cup portion in each of an upper case and a lower case, thereby increasing the volume of an accommodation space have been attempted. However, when the cup portion molding depth is increased, or the two-cup molding is performed, the tensile force applied to a pouch film laminate body during a molding process increases, so that cracks or pinholes are easily generated, and particularly, there is a problem in that the generation of cracks or pin holes increases at a lower end corner of a cup portion in which stress is concentrated during stretching. When cracks or pinholes are generated as described above, the battery case becomes vulnerable to external impacts, and thus is easily damaged, resulting in degrading battery safety.

Korean Patent Laid-Open Publication No. 10-2015-0130002 (Patent Document 1) discloses a case for a secondary battery capable of suppressing cracks or pinholes even during high-molding by bonding an additional member to a cup portion (accommodation portion) edge when manufacturing the case for a secondary battery, or by varying a stretching pressure, thereby forming a thick barrier layer of a cup portion edge. However, when an additional member is bonded to a cup portion edge as described in Patent Document 1, stretchability is reduced during molding, and a step is generated due to the bonding of the additional member, or the thickness of a sealant layer or a base layer becomes non-uniform, thereby adversely affecting sealing durability and insulation properties. In addition, when the additional member is bonded, the thickness of a pouch film laminate body becomes non-uniform, so that there is also a problem in that it is difficult to achieve winding. Meanwhile, when a molding pressure is controlled to increase the thickness of a cup portion edge, stretching occurs non-uniformly, so that wrinkles are generated after molding, which may adversely affect the appearance and sealing quality.

Accordingly, there is a demand for the development of a pouch-type battery case capable of minimizing the generation of cracks in an edge portion of a cup portion without degrading moldability, sealing properties, and insulation properties.

### DISCLOSURE OF THE INVENTION

### TECHNICAL PROBLEM

In order to solve the above problem, the present invention is to provide a pouch-type battery case capable of minimizing the generation of corner cracks in a cup portion and a secondary battery including the same.

### TECHNICAL SOLUTION

In an aspect, the present invention provides a pouch-type battery case formed of a pouch film laminate body comprising a gas barrier layer, a base layer disposed on one surface of the gas barrier layer, and a sealant layer disposed on the other surface of the gas barrier layer, wherein the battery case includes: at least one cup portion having a recessed shape so as to accommodate an electrode assembly; and a terrace positioned in at least a portion of the circumference of the cup portion, wherein the cup portion includes a bottom surface and a plurality of circumferences surrounding the bottom surface, and the thickness of the gas barrier layer is greater than 30 µm, preferably greater than 30 um to 70 um or less, more preferably greater than 30 um to 60 um or less, at a corner at which the bottom surface comes into contact with a pair of circumferences adjacent to each other.

The thickness of the gas barrier layer at the corner may be 50% to 70%, preferably 50% to 65%, more preferably 55% to 65%, of the thickness of the gas barrier layer in the terrace.

The radius of curvature of the corner may be 0.5 mm to 5.0 mm, preferably 1.0 mm to 4.0 mm, more preferably 2.0 mm to 3.5 mm.

The battery case may include two cup portions, and may include a folding portion formed between the two cup portions.

The thickness of the gas barrier layer in the terrace may be 60 um or greater, preferably 60 um to 100 µm, more preferably 60 um to 80 µm.

The cup portion may have a depth of 5.0 mm or greater, preferably 5.0 mm to 20 mm, more preferably 6.5 mm to 20 mm.

The cup portion may have a tensile strength of 200 N or greater, preferably 200 N to 300 N, more preferably 210 N to 260 N.

In another aspect, the present invention provides a secondary battery an electrode assembly formed by stacking a positive electrode, a separator, and a negative electrode, and a pouch-type battery case accommodating the electrode assembly, wherein the battery case is the pouch-type battery case according to the present invention.

### ADVANTAGEOUS EFFECTS

A battery case according to the present invention uses a pouch film laminate body in which the thickness of a gas barrier layer is 60 um or greater, thereby allowing the gas barrier layer to be formed thick by having a remaining thickness of greater than 30 um at a cup portion corner after cup forming, so that even when stretching conditions are severe, the generation of cracking such as cracks or pinholes may be effectively suppressed at the cup portion corner. As described above, the battery case of the present invention has fewer cracks or pinholes at the cup portion corner, and thus has high resistance to external impacts occurring during a transporting process or charging/discharging, so that electrolyte leakage, moisture penetration, and the like due to battery case damage may be prevented to secure battery stability.

In addition, the battery case according to the present invention may sufficiently stretch a gas barrier layer at a cup portion corner to have a thickness of 50% to 70% of the thickness of a gas barrier layer in a terrace, which is a non-molding region, and thus may form a deep cup portion, and accordingly, the volume of an accommodation space of an electrode assembly may be increased to implement a high energy density.

### BRIEF DESCRIPTION OF THE DRAWINGS

FIG. 1 is an exploded perspective view of a secondary battery according to an embodiment of the present invention.
FIG. 2 is a view illustrating a battery case according to another embodiment of the present invention.
FIG. 3 is an enlarged view of portion A of FIG. 1 and FIG. 2.
FIG. 4 is a cross-sectional view of a pouch film laminate body of the present invention.
FIG. 5 is a view showing a cutting position of a battery case in Experimental Example 1.
FIG. 6 is a photograph of a cut sample of Experimental Example 1 and a cross-sectional photograph of the sample.
FIG. 7 is a view showing the cutting position of a battery case for preparing a tensile strength measurement sample of Experimental Example 3.
FIG. 8 is a photograph taken of the appearance of a battery case of Example 1.
FIG. 9 is a photograph taken of the appearance of a battery case of Comparative Example 5.

### BEST MODE FOR CARRYING OUT THE INVENTION

Hereinafter, the present invention will be described in more detail.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

The inventors of the present invention have repeatedly conducted research to manufacture a battery case which has a large accommodation space of a battery assembly, and thus is capable of implementing a high energy density, and which is capable of suppressing damage caused by external stress occurring during a transporting process or charging/discharging process, damage in a cup portion corner which is a vulnerable portion in particular, and as a result, have found that the above objective may be achieved by forming the battery case such that the remaining thickness of a gas barrier layer in the cup portion corner is greater than 30 um after cup molding, and have completed the present invention.

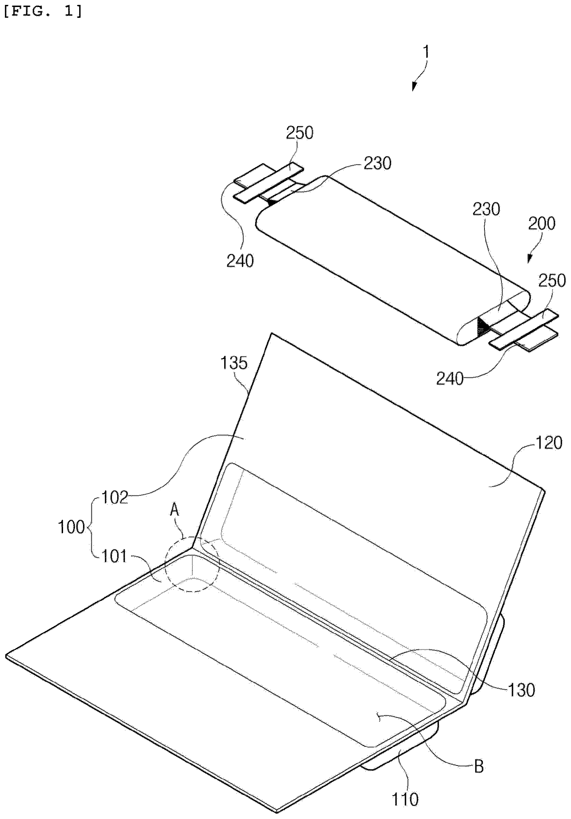

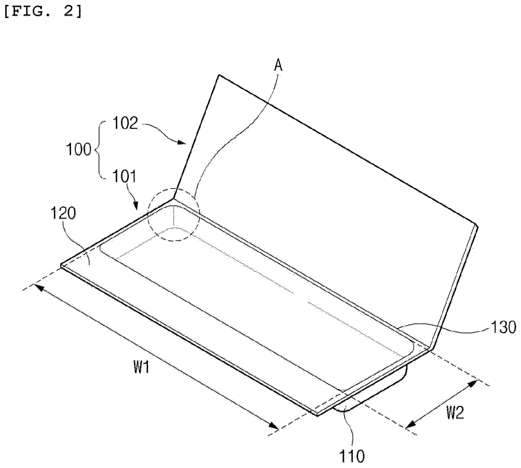

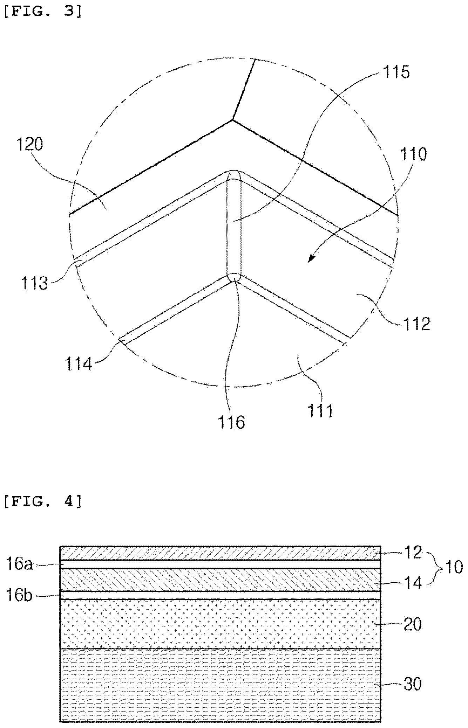

FIG. 1 is an exploded perspective view of a secondary battery 1 according to an embodiment of the present invention, and FIG. 2 is a view illustrating a battery case according to another embodiment of the present invention. In addition, FIG. 3 is an enlarged view of portion A of FIG. 1 and FIG. 2, and FIG. 4 is view illustrating an embodiment of a pouch film laminate body for manufacturing the battery case of the present invention. Hereinafter, the present invention will be described with reference to FIG. 1 to FIG. 4.

Referring to FIG. 1, a secondary battery 1 according to the present invention may include a pouch-type battery case 100 (hereinafter, referred to as a 'battery case') and an electrode assembly 200 accommodated in the battery case 100.

The pouch-type battery case 100 is manufactured by a method in which a flexible pouch film laminate body is inserted into a press molding apparatus, and then a partial region of the pouch film laminate body is stretched by applying a pressure thereto using a punch, thereby forming a cup portion having a recessed shape.

At this time, as illustrated in FIG. 4, the pouch film laminate body includes a gas barrier layer 20, a base layer 10 disposed on one surface of the gas barrier layer 20, and a sealant layer 30 disposed on the other surface of the gas barrier layer 20.

Hereinafter, referring to FIG. 4, each layer of the pouch film laminate body used in the present invention will be described in detail.

### Base layer

The base layer 10 is disposed on the outermost layer of a battery case to protect an electrode assembly from external impacts and to electrically insulate the electrode assembly.

The base layer 10 may be made of a polymer material, and for example, may be made of a polymer material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, and Teflon.

The base layer 10 may have a single-layered structure, or may have a multi-layered structure in which different polymer films 12 and 14 are laminated as illustrated in FIG. 4. When the base layer 10 has a multi-layered structure, an adhesive layer 16a may be interposed between the polymer films.

Meanwhile, the base layer 10 may have an overall thickness of 10 um to 60 um, preferably 20 um to 50 µm, more preferably 30 um to 50 um. If the base layer has a multi-layered structure, the above thickness is a thickness including an adhesive layer. When the base layer 10 satisfies the above range, durability, insulation, and moldability are excellent. If a base layer is too thin, durability may be reduced, and the base layer may break during a molding process, and if too thick, moldability may be degraded, the overall thickness of the pouch film laminate film may increase, and a battery accommodation space may be reduced, resulting in a decrease in energy density.

According to an embodiment, the base layer 10 may have a laminate structure of a polyethylene terephthalate (PET) film and a nylon film. At this time, it is preferable that the nylon film is disposed on the gas barrier layer 20 side, that is, on the inside, and the polyethylene terephthalate film is disposed on the surface side of the battery case.

Polyethylene terephthalate (PET) has excellent durability and electrical insulation, so that when the PET film is disposed on the surface side, durability and insulation properties are excellent. However, since the PET film has weak adhesion with the aluminum alloy thin film constituting the gas barrier layer 20, and has a different stretching behavior, when the PET film is disposed on the gas barrier layer side, de-lamination of the base layer and the gas barrier layer may occur during a molding process, and the gas barrier layer is not uniformly stretched, which may cause a problem in which the moldability is degraded. In comparison, since the nylon film has a similar stretching behavior to that of the aluminum alloy thin film constituting the gas barrier layer 20, when the nylon film is disposed between the polyethylene terephthalate and the gas barrier layer, there may be an effect of improving the moldability.

The polyethylene terephthalate film may have a thickness of 5 um to 20 um, preferably 5 um to 15 µm, more preferably 7 um to 15 um, and the nylon film may have a thickness of 10 um to 40 um, preferably 10 um to 35 µm, more preferably 15 um to 25 um. When the thickness of the polyethylene terephthalate film and the thickness of the nylon film satisfy the above ranges, moldability and stiffness after molding are excellent.

### Gas barrier layer

The gas barrier layer 20 is to secure mechanical strength of the battery case, block access of gas, moisture, or the like outside a secondary battery, and prevent leakage of an electrolyte.

The gas barrier layer 20 may layer may have a thickness of 60 um or greater, preferably 60 µm to 100 µm, more preferably 60 um to 80 um. When the thickness of a gas barrier layer of a pouch film laminate body is 60 um or greater, the remaining thickness of the gas barrier layer at a cup portion corner may be formed to be greater than 30 um even when a cup portion molding depth is formed as deep as 6.5 mm or greater. In addition, when the thickness of the gas barrier layer of the pouch film laminate body satisfies the above range, moldability is improved, thereby increasing the cup portion molding depth, or reducing the generation of cracks and/or pinholes even when two-cup molding is performed, so that resistance to external stress after the molding is improved. When the thickness of the gas barrier layer of the pouch film laminate body is less than 60 µm, in order to maintain the thickness of the gas barrier layer at the cup portion to be 30 um or greater after cup portion molding, the molding depth is required to be reduced or the pressure during stretching is required to be reduced. However, when the molding depth is reduced, the volume of an electrode assembly accommodation space is reduced, thereby making it difficult to implement a high energy density, and when the corner stretching pressure is reduced, stretching is non-uniformly achieved, so that wrinkles may be generated.

Meanwhile, the gas barrier layer 20 may be made of a metal material, and may specifically be composed of an aluminum alloy thin film.

The aluminum alloy thin film may include aluminum, and a metal element other than the aluminum, for example, one or two or more selected from the group consisting of iron (Fe), copper (Cu), chromium (Cr), manganese (Mn), nickel (Ni), magnesium (Mg), silicon (Si) and zinc (Zn).

Preferably, the aluminum alloy thin film may have an iron (Fe) content of 1.2 wt% to 1.7 wt%, preferably 1.3 wt% to 1.7 wt%, more preferably 1.3 wt% to 1.45 wt%. When the iron (Fe) content in the aluminum alloy thin film is less than 1.2 wt%, the strength of the aluminum alloy thin film is degraded, which may cause cracks and pinholes during molding, and when greater than 1.7 wt%, the flexibility of the aluminum alloy thin film is reduced, so that there is a limit to improving moldability and bendability.

In addition, the aluminum alloy thin film includes an aluminum alloy thin film having a grain size of 10 um to 13 um, preferably 10.5 um to 12.5 µm, more preferably 11 um to 12 um. When the grain size of the aluminum alloy thin film satisfies the above range, a molding depth may be increased without the generation of pinholes or cracks during cup forming. When the grain size of the aluminum alloy thin film is greater than 13 µm, the strength of the aluminum alloy thin film is reduced, and more cracks and pinholes are generated due to difficulty in dispersing internal stress during stretching, and when the grain size is less than 10pm, the flexibility of the aluminum alloy thin film is reduced, so that there is a limit to improving moldability and bendability.

The grain size varies depending on a composition of the aluminum alloy thin film and a processing method of the aluminum alloy thin film, and may be measured by observing a cross-section in a thickness direction of the aluminum alloy thin film with a scanning electron microscope (SEM). Specifically, in the present invention, an SEM image of the cross-section in the thickness direction of the aluminum alloy thin film is obtained using a scanning electron microscope, and the maximum diameter of any 30 grains among grains observed in the SEM image is measured, and then the average value thereof is evaluated as a grain size.

Specifically, the aluminum alloy thin film may be an aluminum alloy with the alloy number AA8021, but is not limited thereto.

### Sealant layer

The sealant layer 30 is to be bonded through thermal compression, thereby sealing a battery case, and is positioned in the innermost layer of the pouch film laminate body.

The sealant layer 30 is a surface in contact with an electrolyte and an electrode assembly after being molded into the battery case, and thus, is required to have insulation properties and corrosion resistance, and is required to completely seal the inside to block the movement of substances between the inside and the outside, and thus is required to have high sealing properties.

The sealant layer 30 may be made of a polymer material, and for example, may be made of one or more selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisazole, polyarylate, and Teflon, and among the above, it is particularly preferable that polypropylene (PP) is included, which has excellent mechanical properties such as tensile strength, stiffness, surface hardness, abrasion resistance, and heat resistance, and excellent chemical properties such as corrosion resistance.

More specifically, the sealant layer 30 may include polypropylene, cast polypropylene (CPP), acid-modified polypropylene, a polypropylene-butylene-ethylene copolymer, or a combination thereof.

The sealant layer 30 may have a single-layered structure, or may have a multi-layered structure including two or more layers composed of different polymer materials.

The sealant layer may have a total thickness of 60 um to 100 um, preferably 60 um to 90 um, more preferably 70 um to 90 um. If the sealant layer is too thin, the sealing durability and insulation properties may be reduced, and if too thick, the bendability may be reduced and the total thickness of the pouch film laminate body may increase, resulting in a decrease in energy density relative to volume.

The pouch film laminate body according to the present invention may have a total thickness of 160 um to 200 um, preferably 180 um to 200 um. When the thickness of the pouch film laminate body satisfies the above range, it is possible to increase a molding depth while minimizing the reduction in a battery accommodation space, the degradation in sealing durability, and the like due to an increase in the thickness of the pouch laminate body.

The pouch film laminate body of the present invention as described above may be manufactured through a method known in the art for manufacturing a pouch film laminate body. For example, the pouch film laminate body of the present invention may be manufactured through a method in which the base layer 10 is attached to an upper surface of the gas barrier layer 20 through an adhesive, and then the sealant layer 30 is formed on a lower surface of the gas barrier layer 20 through coextrusion or an adhesive, but is not limited thereto.

The pouch film laminate body manufactured as described above is inserted into a molding apparatus, and then a pressure is applied to a partial region of the pouch film laminate body with a punch to form a cup portion, thereby manufacturing a battery case 100. At this time, the pressure may be about 0.3 MPa to about 1 MPa, preferably about 0.3 MPa to about 0.8 MPa, more preferably about 0.4 MPa to about 0.6 MPa. If the pressure is too low during the molding of the cup portion, drawing may be excessive, which may cause wrinkles, and if the pressure is too high, drawing may not be achieved well, which may cause a lower molding depth.

Meanwhile, the movement speed of the punch may be 20 mm/min to 80 mm/min, preferably 30 mm/min to 70 mm/min, more preferably 40 mm/min to 60 mm/min. If the movement speed of the punch is too fast, a circumference surface 112 of a cup portion 110 is not sufficiently stretched, so that a compression force acts, which may cause wrinkles due to buckling, and if the movement speed of the punch is too slow, stress concentrated on a corner of the cup portion during the molding increases, so that pinholes or cracks may increase.

Referring to FIG. 1 and FIG. 2, the battery case 100 according to the present invention includes a cup portion 110 having a recessed shape, and a terrace 120 positioned in at least a portion of the circumference of the cup portion 110.

The cup portion 110 has an accommodation space B for accommodating the electrode assembly 200, and the terrace 120 refers to a portion which is not molded in the pouch film laminate body, that is, the remaining region except for the cup portion 110.

Referring to FIG. 3, the cup portion 110 may include a bottom surface 111 and a circumference surface 112. The circumference surface 112 may connect the bottom surface 112 and the terrace 120. The circumference surface 112 may be provided in plurality, more specifically, four.

The bottom surface 111 may cover one surface of the electrode assembly 200, and the circumference surface 112 may surround the circumference of the electrode assembly 200.

In addition, the cup portion 110 may include a first edge 113 at which the circumference surface 112 and the terrace 120 meet, a second edge 114 at which the bottom surface 111 and the circumference surface 112 meet, and a third edge 115 at which a pair of circumference surfaces 112 adjacent to each other meet among a plurality of circumference surfaces 112. Each edge 113, 114, and 115 may be formed round to have a predetermined radius of curvature.

In addition, the cup portion 110 may include a corner 116 at which the pair of circumference surfaces 112 adjacent to each other among the plurality of circumference surfaces 112 and the bottom surface 111 meet. That is, the corner 116 may be a portion in which a pair of a second edge 114 and a third edge 115 adjacent to each other overlap. The corner 116 may have a predetermined radius of curvature.

Since the cup portion 110 has four circumference surfaces 112, four edges 113, 114, and 115 and four corners 116 may be formed, respectively.

In the battery case according to the present invention, the gas barrier layer in the corner 116 portion may have a thickness of 30 um or greater, preferably greater than 30 um to 70 um or less, more preferably greater than 30 um to 60 um or less.

The corner 116 is a portion on which the stretching stress is concentrated during the cup molding, and in which the most stretching occurs, and thus is formed thinner than other portions, and cracks and pinholes are generated the most therein, so it is most vulnerable to external impacts. Particularly, in the case of two-cup molding, since the pressure is applied by two punches at a close distance, the stress concentrated on the corner is further increased, thereby intensifying the above problem. In the present invention, in order to solve such a problem, the gas barrier layer at the corner 116 portion of the cup portion is formed thick to have a thickness of greater than 30 µm, so that the generation of cracks may be suppressed and damage due to external impacts may be minimized.

Meanwhile, the thickness of the gas barrier layer at the corner 116 may be 50% to 70%, preferably 50% to 65%, more preferably 55% to 65% of the thickness of the gas barrier layer in the terrace 120. When the thickness of the gas barrier layer at the corner 116 is stretched to be less than 50% of the thickness of the gas barrier layer in the terrace 120, which is a non-molding region, the stretching at the corner 116 occurs excessively, which increases the generation of cracks, and when greater than 70%, the volume of the accommodation space B of the cup portion decreases, so that the energy density of a battery is reduced.

Meanwhile, since the terrace 120 is a region in which molding has not been performed, the thickness of the gas barrier layer in the region is almost the same as the thickness of the gas barrier layer of the pouch film laminate body before the molding. Therefore, in the terrace 120, the thickness of the gas barrier layer; may be 60 um or greater, preferably 60 um to 100 µm, more preferably 60 um to 80 µm.

Meanwhile, the radius of curvature of the corner 116 may be 0.5 mm to 5.0 mm, preferably 1.0 mm to 4.0 mm, more preferably 2.0 mm to 3.5 mm. The radius of curvature of the corner 116 may be the radius of curvature with respect to the inner surface of the corner 116. If the radius of curvature of the corner 116 is too small, it is difficult to maintain the thickness of a gas barrier layer at a corner at 30 um or greater, and if the radius of curvature is too large, the accommodation space of a cup portion is reduced, so that energy density may be reduced.

Specifically, a clearance CL between a first edge 113 and a second edge 114 may be 2 mm or less, preferably 0.3 mm to 1 mm. When the clearance satisfies the above range, an empty space in the cup portion 110 is further reduced, so that the energy density of a secondary battery may be improved, and the appearance of the secondary battery may be further improved. At this time, the clearance CL may refer to a distance between an imaginary first vertical line vertically passing through a boundary point between the first edge 113 and the circumference surface 112, and an imaginary second vertical line vertically passing through a boundary point of the second edge 114 and the circumference surface 112.

Meanwhile, the battery case 100 according to the present invention may include a lower case 101, an upper case 102, and a folding portion 130 connecting the lower case and the upper case.

Specifically, as illustrated in FIG. 1, the battery case 100 according to the present invention may be a two-cup type battery case in which the cup portion 110 is formed in each of the lower case 101 and the upper case 102, and or as illustrated in FIG. 2, may be a one-cup type battery case in which the cup portion 110 is formed only in the lower case 101. In the case of the two-cup type battery case, after an electrode assembly and an electrolyte are accommodated therein, an upper case is folded such that a cup portion of the upper case and a cup portion of a lower case face each other, so that a thicker electrode assembly may be accommodated compared to the one-cup type battery case, and accordingly, there is an advantage of being advantageous in implementing high energy density.

Meanwhile, in the present invention, the depth of a cup portion may be 5.0 mm or greater, preferably 5.0 mm to 20 mm, more preferably 6.5 mm to 20 mm. More specifically, in the case of the one-cup type battery case, the depth of a cup portion may be 7.0 mm to 17 mm, preferably 9.0 mm to 15 mm, and in the case of the two-cup type battery case, the depth of each cup may be 5.0 mm to 12 mm, preferably 6 mm to 10 mm, more preferably 7 mm to 10 mm.

When the depth of a cup is less than 6.5 mm, the volume of the accommodation space B of an electrode assembly is small, so that it is difficult to achieve high energy density. Meanwhile, when the depth of a cup portion increases, it is advantageous in terms of energy density, but cracks or pinholes are generated during the molding process of a cup portion, which may reduce battery safety.

Meanwhile, the folding portion 130 connects the lower case 101 and the upper case 102, accommodates the electrode assembly 200 in the cup portion 110, and is folded after the injection of an electrolyte solution such that the upper case 102 seals the cup portion 110 of the lower case 101. When the folding portion 130 is included, the lower case 101 and the upper case 102 are connected as a single body, so that when a sealing process is performed later, the number of sides to be sealed is reduced, so that there is an effect of improving processibility.

The folding portion 130 is formed spaced apart from the cup portion 110, and the separation distance between the folding portion 130 and the cup portion 110 may be 0.5 mm to 3 mm, preferably 0.5 mm to 2 mm. When the folding portion 130 is formed too close to the cup portion 110, folding is not performed smoothly, and when the folding portion 130 is formed too far from the cup portion 110, the overall volume of a secondary battery increases, so that the energy density with respect to volume may be reduced. In the case of the two-cup case, the folding portion may be formed to satisfy the separation distance for each cup portion.

The battery case of the present invention as described above has a large accommodation space of an electrode assembly, and thus is capable of implementing a high energy density, and has excellent cup portion stiffness, and thus is capable of minimizing damage caused by external stress occurring during a transporting process or a charging/discharging process. Specifically, the battery case according to the present invention has a tensile strength of a cup portion of as high as 200 N or greater, preferably 200 N to 300 N, more preferably 210 N to 260 N, and thus has excellent resistance to external impacts. At this time, the tensile strength of a cup portion refers to a strength at which breakage occurs when a sample, which is prepared by cutting a cup portion of a battery case to a width × length of 15 mm × 80 m, is fixed to a UTM device with a 30 mm grip gap, and pulled at a tensile speed of 50 mm/min.

After the electrode assembly 200 is accommodated in the battery case 100 as described above, and an electrolyte solution is injected, the folding portion 130 is folded such that the upper case 102 is positioned in an upper portion of the lower case 101, and the terrace 120 is sealed to manufacture a secondary battery.

The electrode assembly 200 may include a plurality of alternately stacked electrodes and a plurality of separators. The plurality of electrodes may include positive electrodes and negative electrodes which are alternately stacked having the separators interposed therebetween and have polarity opposite to each other.

In addition, the electrode assembly 200 may be provided with a plurality of electrode tabs 230 welded to each other. The plurality of electrode tabs 230 may be connected to a plurality of electrodes 210, and may protrude to the outside from the electrode assembly 200, thereby acting as a passage through which electrons may move between the inside and outside of the electrode assembly 200. The plurality of electrode tabs 230 may be positioned inside the battery case 100.

The electrode tap 230 connected to a positive electrode and the electrode tab 230 connected to a negative electrode may protrude in different directions with respect to the electrode assembly 200. However, the embodiment is not limited thereto, and it is also possible that the electrode tap 230 connected to the positive electrode and the electrode tab 230 connected to the negative electrode protrude side by side in the same direction.

In the plurality of electrode tabs 230, a lead 240 which supplies electricity to the outside of the secondary battery may be connected by spot welding or the like. One end of the lead 240 may be connected to the plurality of electrode tabs 230 and the other end thereof may protrude to the outside of the battery case 100.

A portion of the lead 240 may be surrounded by an insulation portion 250. For example, the insulation portion 250 may include an insulation tape. The insulation portion 250 may be positioned between the terrace 120 of the first case 101 and the second case 102, and in this state, the terrace 120 and the second case 102 may be thermally fused with each other. In this case, a portion of the terrace 120 and a portion of the second case 102 may be thermally fused with the insulation portion 250. Therefore, the insulation unit 250 may prevent electricity generated from the electrode assembly 200 from flowing to the battery case 100 through the lead 240, and may maintain the sealing of the battery case 100.

The electrolyte is for moving lithium ions generated by an electrochemical reaction of an electrode 101 during charging and discharging of the secondary battery 1, and may include a polymer using a non-aqueous organic electrolyte or a polymer electrolyte, which is a mixture of a lithium salt and a high-purity organic solvent. Furthermore, the electrolyte may include a sulfide-based, oxide-based or polymer-based solid electrolyte, and such a solid electrolyte may have flexibility to be easily deformed by an external force.

### MODE FOR CARRYING OUT THE INVENTION

Hereinafter, the present invention will be described in more detail with reference to specific examples.

### Example 1

On one surface of a AA8021 aluminum (Al) alloy thin film (Manufacturer: SaMa aluminum) having a thickness of 60 um, a nylon film (Product name: Nylon 6, manufacturer: Hyosung) having a thickness of 25 um and a polyethylene terephthalate (PET) film (Manufacturer: Hyosung) having a thickness of 12 um were laminated in a dry lamination manner using a urethane adhesive to form a base layer. Next, acid-modified polypropylene (PPa) and polypropylene were co-extruded on the other surface of the aluminum alloy thin film, thereby forming a sealant layer having a thickness of 80 um to manufacture a pouch film laminate body.

The pouch film laminate body was cut to a size of 266 mm × 240 mm, and mounted on a two-cup molding apparatus provided with a die and a punch, and then drawing molding was performed thereon by lowering the punch with a pressure of 0.5 MPa and a speed of 50 mm/min such that the molding depth was 9.1 mm to manufacture a battery case including two cup portions. At this time, the mold conditions of the two-cup molding apparatus are as shown in [Table 1] above.

**[Table 1]**

| | | |
|---|---|---|
| Edge curvature (mm) | Punch (corner) | 0.5 (3.5) |
| | Die | 1.0 |
| | Bridge | 1.0 |
| Corner curvature (mm) | Punch | 2.0 |
| | Die | 2.5 |
| Clearance (mm) | Bridge side | 0.35 |
| | Side side | 0.5 |
| Bridge (mm) | Width | 2.0 |
| Size (mm) | Punch | 61×159×2 |
| | Die | 62×160×2 |

### Example 2

A pouch film laminate body and a battery case were manufactured in the same manner as in Example 1, except that a AA8021 aluminum (Al) alloy thin film having a thickness of 80 um was used instead of the AA8021 aluminum (Al) alloy thin film having a thickness of 60 µm.

### Example 3

A pouch film laminate body and a battery case were manufactured in the same manner as in Example 1, except that drawing molding was performed such that the molding depth was 6.2 mm.

### Example 4

A pouch film laminate body and a battery case were manufactured in the same manner as in Example 1, except that a AA8021 aluminum (Al) alloy thin film having a thickness of 80 um was used instead of the AA8021 aluminum (Al) alloy thin film having a thickness of 60 µm, and drawing molding was performed such that the molding depth was 6.2 mm.

### Example 5

A film laminate body and a battery case were manufactured in the same manner as in Example 1, except that drawing molding was performed by lowering the punch with a pressure of 0.1 MPa and a speed of 50 mm/min such that the molding depth was 11.5 mm.

### Comparative Example 1

A pouch film laminate body and a battery case were manufactured in the same manner as in Example 1, except that a AA8021 aluminum (Al) alloy thin film having a thickness of 40 um was used instead of the AA8021 aluminum (Al) alloy thin film having a thickness of 60 um.

### Comparative Example 2

A pouch film laminate body and a battery case were manufactured in the same manner as in Example 1, except that a AA8021 aluminum (Al) alloy thin film having a thickness of 40 um was used instead of the AA8021 aluminum (Al) alloy thin film having a thickness of 60 µm, and drawing molding was performed such that the molding depth was 6.2 mm.

### Comparative Example 3

A pouch film laminate body and a battery case were manufactured in the same manner as in Example 1, except that a AA8021 aluminum (Al) alloy thin film having a thickness of 40 um was used instead of the AA8021 aluminum (Al) alloy thin film having a thickness of 60 µm, and drawing molding was performed such that the molding depth was 11.5 mm.

### Comparative Example 4

A pouch film laminate body and a battery case were manufactured in the same manner as in Example 1, except that drawing molding was performed such that the molding depth was 11.5 mm.

### Experimental Example 1

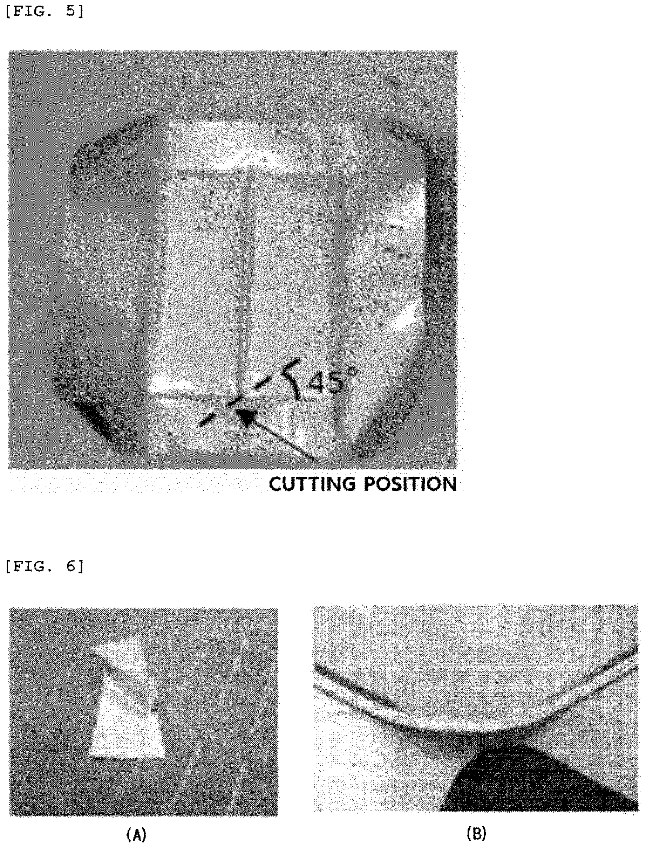

A sample was prepared by cutting between cup portions of the battery case manufactured in each of Examples 1 to 5 and Comparative Examples 1 to 4, that is, a corner in a folding portion direction, at 45 degrees. FIG. 5 illustrates the cutting position of the battery case. Thereafter, the cut cross-section of the sample was observed to measure the thickness of the gas barrier layer at a corner at which the bottom surface and the circumference surface of the cup portion were in contact, and the percentage of the ratio of the thickness of the gas barrier layer in a corner portion after cup molding to the thickness of the gas barrier layer before the molding was represented as a residual rate. FIG. 6 illustrates a cut sample (A) and a photograph (B) of the cross-section of the sample.

The measurement results are shown in [Table 2] below.

**[Table 2]**

| | Molding depth (mm) | Thickness of gas barrier layer before molding (µm) | Thickness of gas barrier layer of a cup portion edge (µm) | Residual rate (%) |
|---|---|---|---|---|
| Example 1 | 9.1 | 60 | 34.2 | 57 |
| Example 2 | 9.1 | 80 | 46.5 | 58 |
| Example 3 | 6.2 | 60 | 44.4 | 74 |
| Example 4 | 6.2 | 80 | 60.2 | 75 |
| Example 5 | 11.5 | 60 | 33.1 | 55 |
| Comparative Example 1 | 9.1 | 40 | 20.6 | 52 |
| Comparative Example 2 | 6.2 | 40 | 27.2 | 68 |
| Comparative Example 3 | 11.5 | 40 | 15.8 | 40 |
| Comparative Example 4 | 11.5 | 60 | 29.4 | 49 |

### Experimental Example 2: Evaluation of generation of cracks

Ten battery cases were respectively manufactured by the methods of Examples 1 to 5 and Comparative Examples 1 to 4, and four corner portions of a cup portion of each of the battery cases were illuminated with LED light to visually identify whether a crack was generated. Among the ten battery cases, when the number of battery cases with generated cracks was two or less, it is denoted by OK, and when the number of battery cases with generated cracks was three or more, it is denoted by NG. The measurement results are shown in Table 3 below.

### Experimental Example 3: Measurement tensile intensity

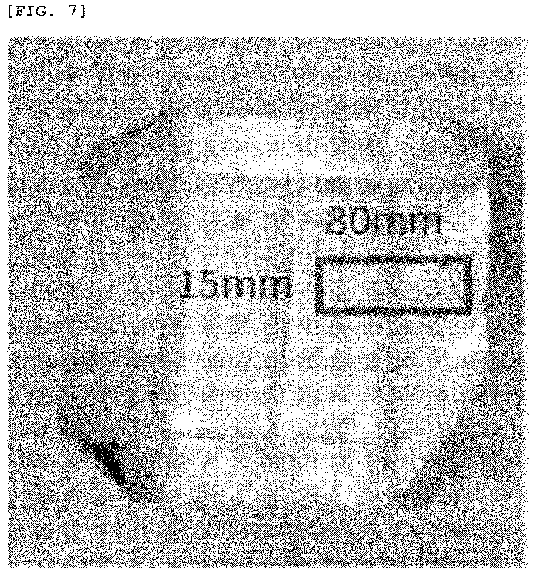

A cup portion of the battery case manufactured by the method of each of Examples 1 to 5 and Comparative Examples 1 to 4 was cut to a width × length of 15 mm × 80 mm to prepare a sample. FIG. 7 illustrates the cutting position (box region) of the battery case. Thereafter, each of the samples was fixed to a UTM device with a 30 mm grip gap, and then pulled at a tensile speed of 50 mm/min to measure a strength at which breakage occurred as the tensile strength. The measurement results are shown in the following table.

**[Table 3]**

| | Crack evaluation | Tensile strength (N) |
|---|---|---|
| Example 1 | OK | 225 |
| Example 2 | OK | 234 |
| Example 3 | OK | 231 |
| Example 4 | OK | 247 |
| Example 5 | OK | 225 |
| Comparative Example 1 | NG | 140 |
| Comparative Example 2 | NG | 178 |
| Comparative Example 3 | NG | Measurement not possible |
| Comparative Example 4 | NG | Measurement not possible |

Through [Table 3], it can be seen that the battery cases of Examples 1 to 4, in which the thickness of the gas barrier layer at the cup portion corner is greater than 30 µm, had less corner cracking, whereas the battery cases of Comparative Examples 1 to 4, in which the thickness of the gas barrier layer is 30 um or less, had high occurrence of corner cracking.

In addition, the battery cases of Examples 1 to 4 showed that the tensile strength of the cup portion was as high as 200 N or greater, whereas the battery cases of Comparative Examples 1 and 2 showed that the tensile strength of the cup portion was as low as 200 N or less, and in the case of Comparative Example 3 and Comparative Example 4, the battery cases were broken immediately at the beginning of the test so that it was not possible to measure the tensile strength thereof.

### Experimental Example 4

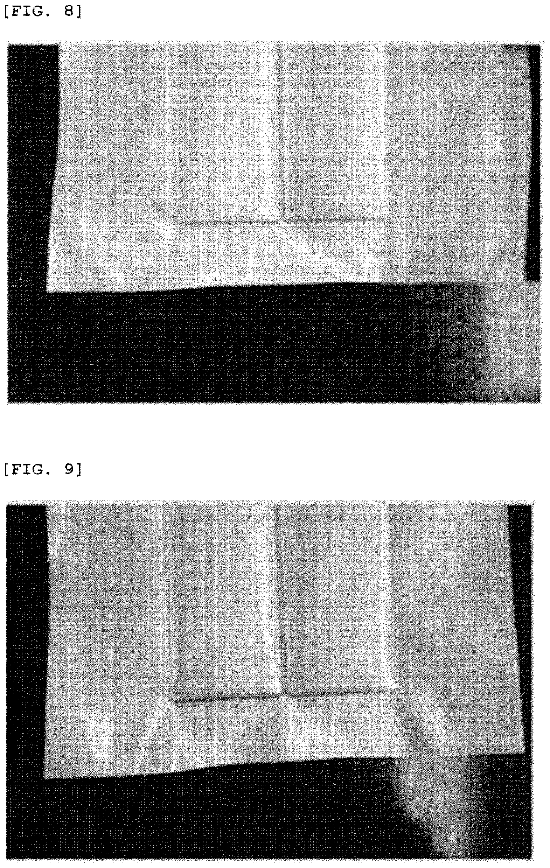

The appearance of the battery case manufactured by each of Example 1 and Example 5 was observed. FIG. 8 is a photograph of the appearance of the battery case of Example 1, and FIG. 9 is a photograph of the appearance of the battery case of Example 5.

As shown in FIG. 8 and FIG. 9, no wrinkles were observed in the battery case of Example 1, but wrinkles were generated in the terrace portion of the battery case of Example 5 molded by adjusting the pressure low.

### <Description of symbols>

1: Secondary battery
10: Base layer
20: Gas barrier layer
30: Sealant layer
100: Battery case
101: Lower case
102: Upper case
110: Cup portion
120: Terrace
130: Folding portion
200: Electrode assembly

## Claims

1. A pouch-type battery case comprising:
a pouch film laminate body comprising a gas barrier layer, a base layer disposed on one surface of the gas barrier layer, and a sealant layer disposed on the other surface of the gas barrier layer,
wherein the battery case includes at least one cup portion having a recessed shape configured to accommodate an electrode assembly, and a terrace positioned in at least a portion of a circumference of the cup portion,
wherein:
the cup portion includes a bottom surface and a plurality of circumference surfaces surrounding the bottom surface; and
the thickness of the gas barrier layer is greater than 30 um at a corner at which the bottom surface comes into contact with a pair of circumference surfaces adjacent to each other.

2. The pouch-type battery case of claim 1, wherein the thickness of the gas barrier layer at the corner is 50% to 70% of a thickness of the gas barrier layer in the terrace.

3. The pouch-type battery case of claim 1, wherein a thickness of the gas barrier layer in the terrace is 60 µm or greater.

4. The pouch-type battery case of claim 1, wherein a radius of curvature of the corner is 0.5 mm to 5.0 mm.

5. The pouch-type battery case of claim 1, wherein the battery case comprises: a lower case in which the cup portion is formed; an upper case folded over the lower case to seal the cup portion; and a folding portion connecting the upper case and the lower case.

6. The pouch-type battery case of claim 5, wherein a separation distance between the folding portion and the cup portion is 0.5 mm to 3 mm.

7. The pouch-type battery case of claim 5, wherein the cup portion is formed in the upper case.

8. The pouch-type battery case of claim 1, wherein the cup portion has a depth of 5.0 mm or greater.

9. The pouch-type battery case of claim 1, wherein the cup portion has a tensile strength of 200 N or greater.

10. The pouch-type battery case of claim 1, wherein the base layer has a laminate structure of a polyethylene terephthalate film and a nylon film.

11. The pouch-type battery case of claim 10, wherein the polyethylene terephthalate film has a thickness of 5 um to 20 um, and the nylon film has a thickness of 10 um to 30 µm.

12. The pouch-type battery case of claim 1, wherein the gas barrier layer comprises an aluminum alloy thin film.

13. The pouch-type battery case of claim 12, wherein the aluminum alloy thin film comprises 1.2 wt% to 1.7 wt% of iron.

14. The pouch-type battery case of claim 12, wherein the aluminum alloy thin film has a grain size of 10 um to 13 µm.

15. The pouch-type battery case of claim 1, wherein the sealant layer has a thickness of 60 um to 100 µm.

16. The pouch-type battery case of claim 1, wherein the sealant layer comprises polypropylene, cast polypropylene, acid-modified polypropylene, a polypropylene-butylene-ethylene copolymer, or a combination thereof.

17. A secondary battery comprising:
an electrode assembly formed by stacking a positive electrode, a separator, and a negative electrode; and
a pouch-type battery case accommodating the electrode assembly, wherein the battery case is the pouch-type battery case of any one of claims 1 to 16.
